# DEMANDE DE BREVET EUROPEEN

(11) **EP 0 904 979 A1**
(43) Date de publication de la demande: **31.03.1999**
(21) Numéro de dépôt: 98870204.9
(22) Date de dépôt: 25.09.1998
(51) Int. Cl.: B60P 3/08

(54) **Semi-remorque polyvalente permettant le transport de voitures ou de fret par route et/ou par rail**

(30) Priorité: 26.09.1997 BE 9700781
(71) Demandeur: ESPACE MOBILE INTERNATIONAL S.A., 6790 AUBANGE (BE)
(72) Inventeur: Postyns, Jean Pierre, B-1410 Waterloo (BE); Minne Philippe, B-6782 Habergy (BE)
(74) Mandataire: Van Malderen, Michel

(57) **Abrégé**

La présente invention concerne une semi-remorque routière aux gabarits routiers internationaux européens, à plancher surbaissé pour transports de voitures et/ou de fret, embarquable sur wagons dits "à poches" surbaissés, rigides ou articulés, les semi-remorques chargées de leurs voitures ou de fret, et les wagons ayant des caractéristiques géométriques faisant que leur ensemble imbriqué respecte les gabarits ferroviaires internationaux européens, les dites semi-remorques étant équipée de palettes de manutention et de stockage des voitures, ces palettes étant à géométrie variable en longueur, grâce à des dispositifs de translations de leurs traverses porteuses des voitures par rapport à leurs longerons sur lesquels elles sont montées à rotules, ces palettes étant positionnables en hauteur, grâce à des dispositifs de manutention coordonnés entre eux ou non, ces divers dispositifs étant destinés à disposer les voitures en des situations d'encastrement optimum entre elles et notamment sur trois niveaux, pour conférer à la semi-remorque et à l'ensemble semi-remorque / wagon des capacités élevées de transport de voitures, ou, alternativement, à dégager le plancher de chargement pour permettre le transport de fret de retour, ces caractéristiques déterminant une rentabilité globale élevée.

## Description

### Objet de l'invention

La présente invention concerne une semi-remorque polyvalente permettant le transport de voitures ou de fret par la route et/ou par le rail.

### Arrière-plan technologique à la base de l'invention

On connaît les techniques classiques de transport de voitures par la route, par lesquelles des véhicules tracteurs, tracteurs / porteurs ou tractés sont équipés de plates-formes mobiles en hauteur et inclinaison sur lesquelles les voitures à transporter sont conduites et arrimées.

Les législations européennes en vigueur privilégient économiquement, de par les longueurs maximum de véhicule qu'elles autorisent, la solution camion plus remorque par rapport à la solution tracteur plus semi-remorque.

La première permet normalement le transport de huit voitures en respectant les gabarits imposés, neuf à dix en les transgressant, la seconde ne permet normalement que le transport de six voitures en respectant les gabarits imposés, sept en les transgressant.

On connaît d'autre part les techniques classiques de transports de voitures par le rail, par lesquelles les voitures sont directement chargées sur wagons équipés de plates-formes de chargement, et ce donc sans faire usage de remorques, semi-remorques, ou d'une quelconque structure porteuse intermédiaire.

Ces deux techniques de transport répondent parfaitement à certains créneaux d'utilisations spécifiques, mais s'avèrent ne pas offrir la solution économique idéale notamment dans les cas de transport de constructeur de voitures à agent ou concessionnaire de ces voitures sur des longues distances justifiant l'utilisation de transports bimodes, rail/route internationaux. En effet, elles déterminent des ruptures de charges, manutentions complémentaires et leurs risques inhérents de détériorations ou vols.

On connaît également la technique d'embarquement de remorques ou semi-remorques classiques sur wagons surbaissés classiques. Ce type de transports rail/route ne permet pas de rencontrer les impératifs de gabarits ferroviaires européens internationaux, et ne peut donc s'appliquer que très localement sur des tronçons de réseau dont l'infrastructure hors normes a été spécifiquement adaptée.

On connaît enfin la technique d'embarquement de semi-remorques sur wagons poches ("kangaroo wagons" ou "piggy back") classiques. Ce type de transport rail/route ne permet pas l'utilisation de semi-remorques dimensionnées au gabarits maximum routiers et limite donc leurs capacités.

### Buts de l'invention

L'invention vise à réaliser une semi-remorque polyvalente équipée et embarquable sur wagons poches tels que décrits, en vue d'éviter les ruptures de charges tout en permettant le choix du transport international mixte rail/route en utilisant au mieux ses avantages écologiques, et, principalement dans le cas des wagons poches articulés, ses avantages économiques résultant soit du nombre de voitures, soit de volume de fret, transporté par mètre de convoi ferroviaire. Elle permet donc d'éviter l'usage de "parcs d'importation" et donc autorise un transport "Plant to dealer" (Usine à concessionnaire) sous une forme de "Just in time" (flux tendus).

### Eléments caractéristiques de l'invention

L'invention porte essentiellement sur une semi-remorque polyvalente telle que décrite à la revendication 1. Des caractéristiques fonctionnelles et constructives avantageuses complémentaires sont reprises dans les revendications subsidiaires.

### Brève description des dessins

Dans les dessins sont représentés :
- Figure 1 :: Remorque chargée de voitures en position route. Cette figure montre la façon d'imbriquer les voitures, le "king pin" à hauteur variable et la suspension;
- Figure 2 :: Remorque chargée sur un wagon poche classique avec suspension relevée pour respecter le gabarit chemin de fer;
- Figure 3 :: Remorque chargée sur un wagon spécial à 3 bogies;
- Figure 4 :: Coupe transversale de la remorque montrant l'imbrication des voitures;
- Figure 5 :: Vue en plan montrant le chargement de fret;
- Figure 6 :: Vue schématique de la remorque montrant la position des voitures sur les cadres élévateurs;
- Figure 7 :: Vue identique à celle de la figure 6 avec visualisation schématique des emplacements voiture (colonnes A, B, C et niveaux 1, 2, 3);
- Figure 8 :: Vue schématique montrant la façon de faire passer les voitures sur le col de cygne et la rentrée d'un véhicule dans la remorque;
- Figure 9 :: Vue schématique des systèmes de manutention avec cadre avec les traverses se déplaçant en X et élévation du cadre en Z grâce à un système à câbles;
- Figure 10 :: Vue en plan d'un cadre élévateur avec longerons, traverses, butées latérales, moteur d'entraînement avec le renvoi d'angle, arbre de synchronisation gauche-droite et rotules libérant les mouvements induits par la structure; tandis que la figure 10B représente une vue en détail de l'articulation longeron/traverse;
- Figure 11 :: Vues en plan et en perspective d'un longeron avec moteur d'entraînement, butées latérales, système d'entraînement des traverses par chaînes, chaîne "crémaillère" pour l'arbre de synchronisation et chariot d'entraînement avec ses rotules;
- Figure 12 :: Système d'élévation en Z avec vérin, crémaillère et poulies d'enroulement pour les câbles;
- Figure 13 :: Vue en plan par le dessus et vues en coupe selon A-A et B-B du dispositif de positionnement;
- Figure 14 :: Vue schématique de la bâche et du "flees".

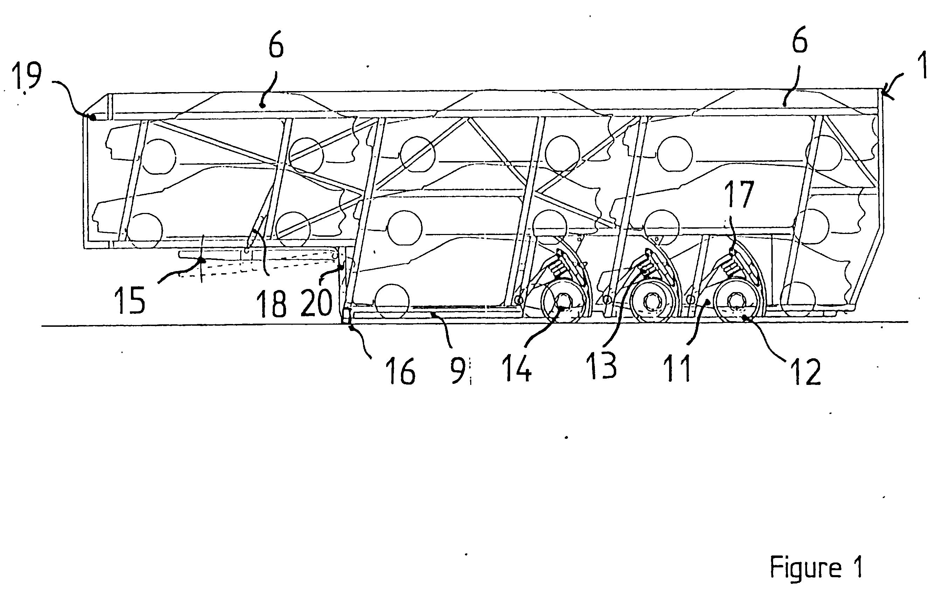

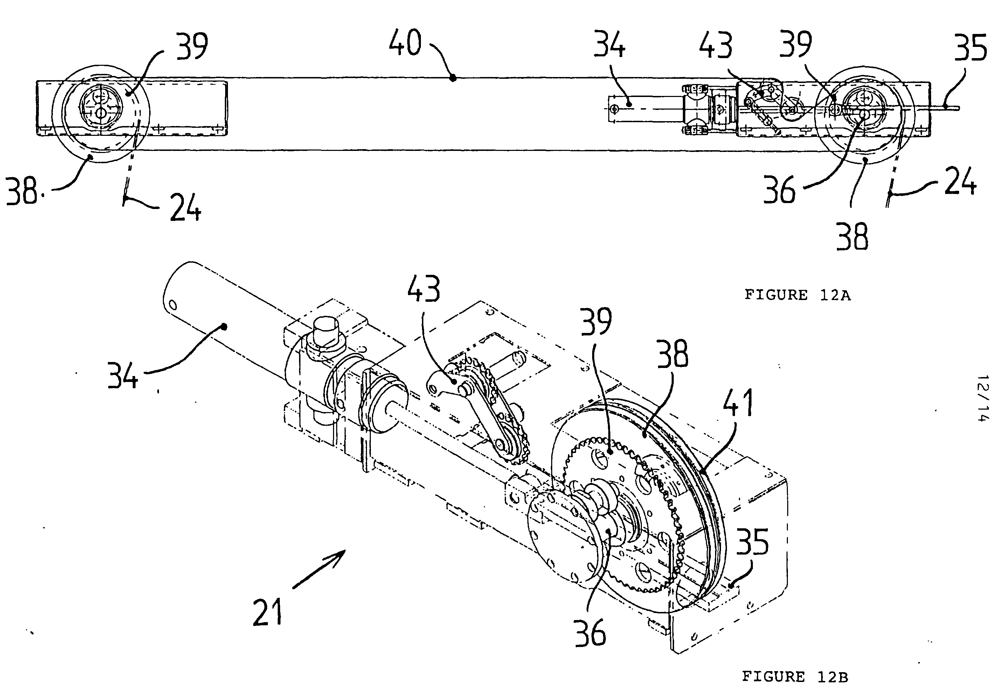

L'invention sera décrite plus en détails en référence aux figures 1 à 13 sur base d'une forme d'exécution de l'invention donnée à titre d'illustration sans caractère limitatif.

Des repères de référence identiques sont utilisés pour des éléments identiques ou équivalents dans les différentes figures.

### Description d'une forme d'exécution préférée de l'invention

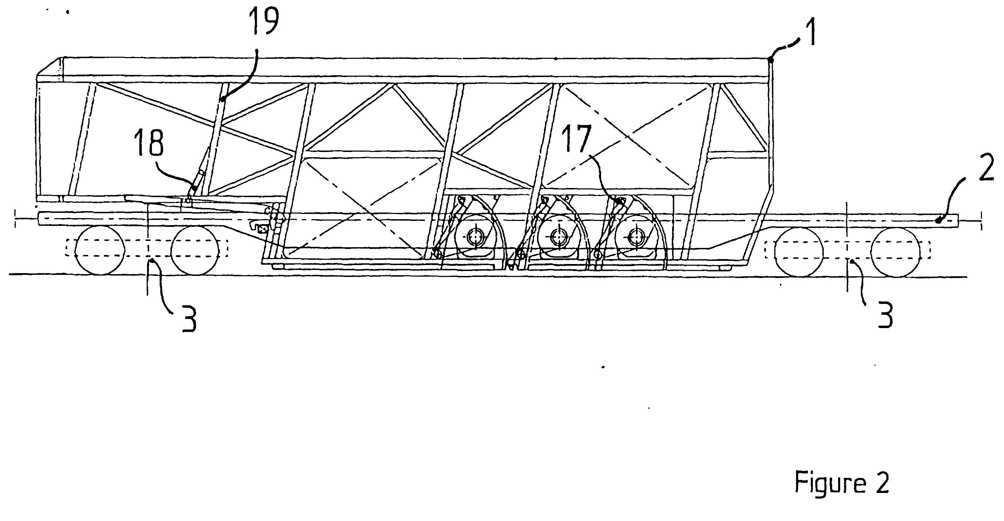

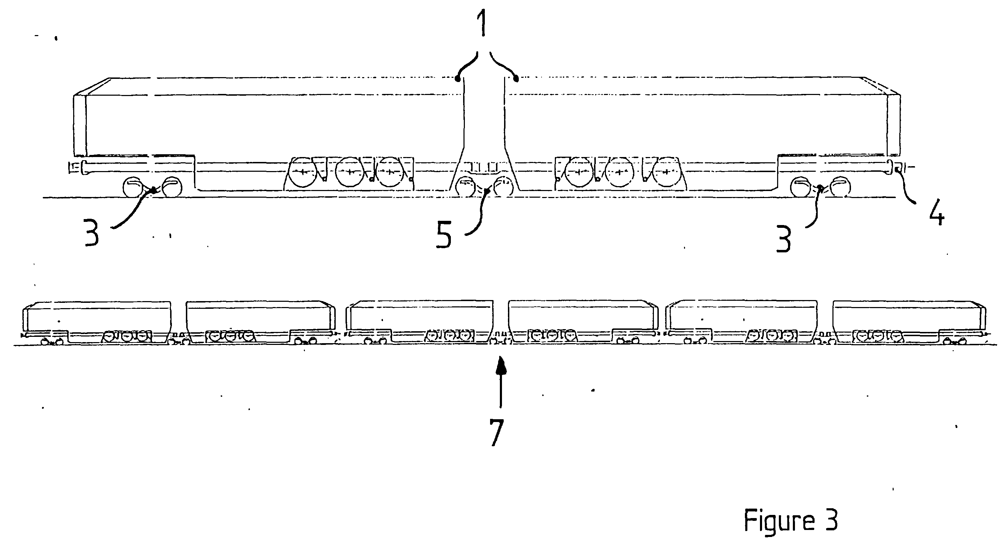

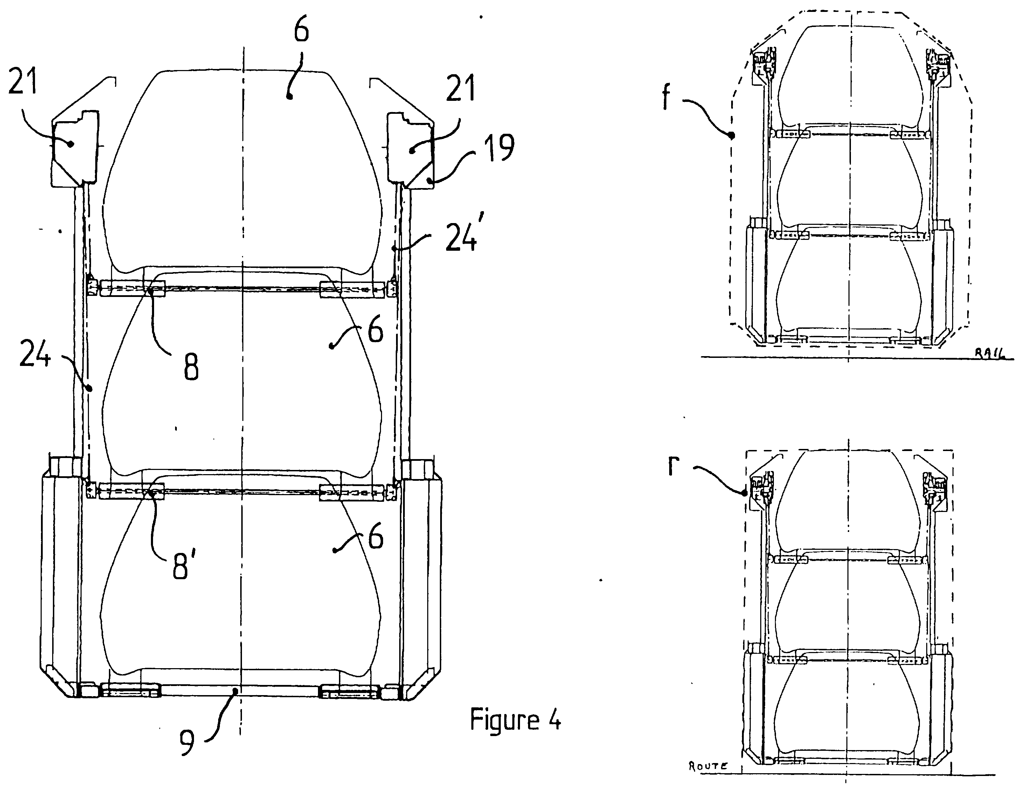

Ainsi que représenté à la figure 1, la semi-remorque (1) selon l'invention peut être utilisée indifféremment sur route, en y étant tractée par un tracteur routier classique et non spécialisé, ou sur rail, en y étant chargée sur des wagons dits "poches" dont les caractéristiques géométriques sont telles que les semi-remorques (1) peuvent y être positionnées, soit isolées sur wagons poche rigides (2) à deux bogies (3) tels que ceux de la figure 2, soit par couple, dos à dos, sur des wagons poche articulés (4), tels que ceux de la figure 3, entre les bogies (3) d'extrémités et sous articulation (5), en position surbaissée, de façon à utiliser un maximum de hauteur disponible dans les gabarits ferroviaires européens référés "f", tout en étant dimensionnées au maximum des gabarits routiers européens référés "r" autorisés (voir figure 4).

Les dispositions géométriques choisies, représentées en coupe transversale au rail et à la route, combinées à un empilage des voitures (figures 1 et 4), utilisant, les volumes en gardes au sol des voitures (6) supérieures pour y loger les volumes des toitures des voitures (6) inférieures, permet l'empilage de trois voitures moyennes au lieu de deux dans les techniques classiques, et donc le transport de huit voitures (6) par semi-remorque (1), soit seize voitures (6) par wagon poche articulé (4), soit encore plus d'une voiture (6) par deux mètres courants de convoi ferroviaire (7).

Ce coefficient d'utilisation, combiné aux avantages tarifaires du transport rail/route confère à ce mode de transports de voitures (6) par semi-remorque (1) selon l'invention des avantages économiques considérables et justifie son utilisation dans certains créneaux spécifiques de ces services de distribution.

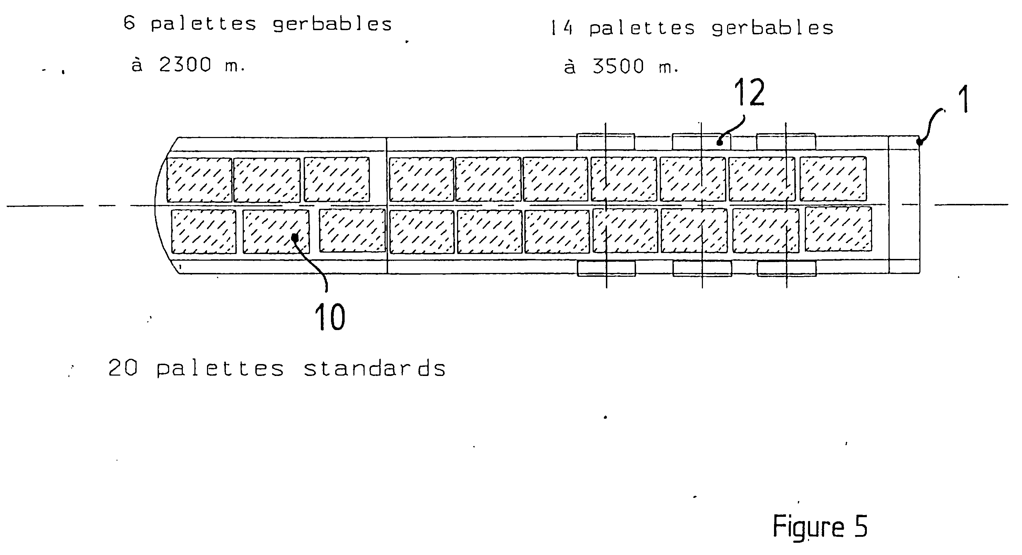

Des palettes à géométrie variable (8) supportant et arrimant chaque voiture (6) peuvent être escamotées sous toiture de la semi-remorque (1) pour dégager un plancher (9) plan susceptible de recevoir du fret (10), notamment en trajets de retour, facteur déterminant une augmentation complémentaire de rentabilité (voir figure 5).

La semi-remorque (1) équipée selon l'invention fait usage de nombreuses techniques classiques pour ce type de véhicules industriels. Elle comporte, ainsi que représenté à la figure 1, notamment des faux-essieux multiples (11) à roues indépendantes non jumelées (12) pour ménager une large zone continue de chargement. Ces faux essieux (11) à roues indépendantes (12) comportent des suspensions à air classiques (13), des freins classiques (14) et tous dispositifs auxiliaires classiques.

Elle utilise également un pivot d'articulation et d'accouplement au tracteur ou "king pin" (15), des béquilles (16) et auxiliaires classiques.

Tant les dispositifs de suspensions de roues (13) que le pivot d'articulation (15) sont équipés de dispositifs hydrauliques de variations de niveaux (17 et 18) permettant de faire varier la garde au sol de la remorque (1) en fonction des utilisations, routières classiques ou surbaissées, ou de manoeuvres notamment d'embarquement/débarquement de navires, de passages à niveaux de chemin de fer, etc., et d'escamoter les roues (12) à un niveau supérieur au gabarit inférieur de la structure (19) afin de répondre aux impératifs des gabarits ferroviaires (f) (voir figures 2 et 4).

La semi-remorque est à structure autoportante (19) à col de cygne (20) reliant les composants mécaniques. Cette situation porte ou intègre les dispositifs de manutention (21) et des palettes à géométrie variable (8), qui relèvent tous deux de l'invention.

L'invention est donc notamment constituée desdits dispositifs de manutention (21) des palettes à géométrie variable (8), de leur intégration dans la structure (19) en utilisant au maximum les volumes disponibles d'une semi-remorque (1) répondant aux gabarits maximum routiers (r) (voir figure 4) et conçue pour chargement sur des wagons poche, l'ensemble voitures (6), semi-remorque (s) (1), wagon (2 et 4), répondant aux gabarits maximum ferroviaires (f).

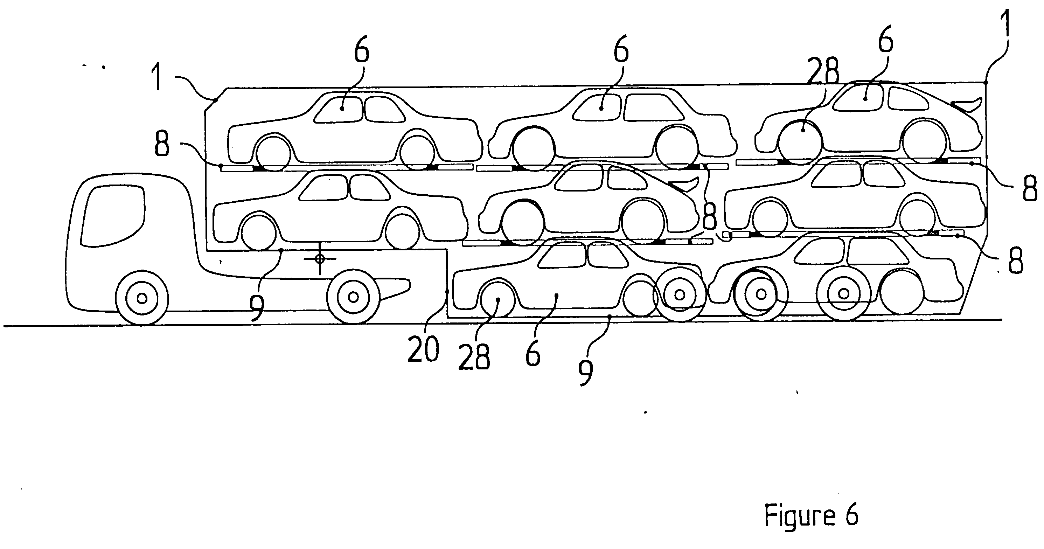

Ces dispositifs de manutention (21) et de palettes à géométrie variable (8) sont utilisés de manière répétitive en trois colonnes sensiblement verticales ou obliques pour favoriser les encastrements volumiques des toitures dans les gardes au sol des voitures (6) (voir figure 6).

La première des colonnes est disposée au-dessus du col de cygne (20) de la semi-remorque (1) et ne comporte que deux positions superposées de chargement, l'une au plancher (9), l'autre sur une seule palette mobile à géométrie variable (8).

Les colonnes suivantes sont disposées derrière le col de cygne (20), entre les trains de roues (12), et comportent trois positions de chargement, l'une au plancher (9), les autres sur deux palettes mobiles à géométrie variable (8).

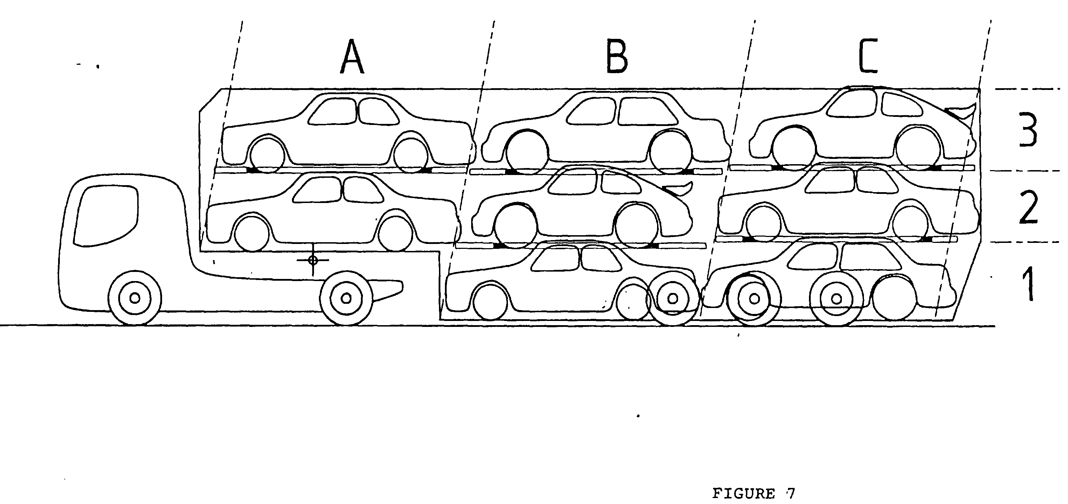

La figure 7 montre ces colonnes référées A, B, et C, et ces niveaux référés 1, 2, et 3.

L'accès aux positions B 1 et C 1 se fait par roulage sur un hayon arrière rabattable (22). L'accès à la position A 2 se fait par élévation de la palette (8) de position B 2 en position convenable et roulage sur des poutres mobiles (23).

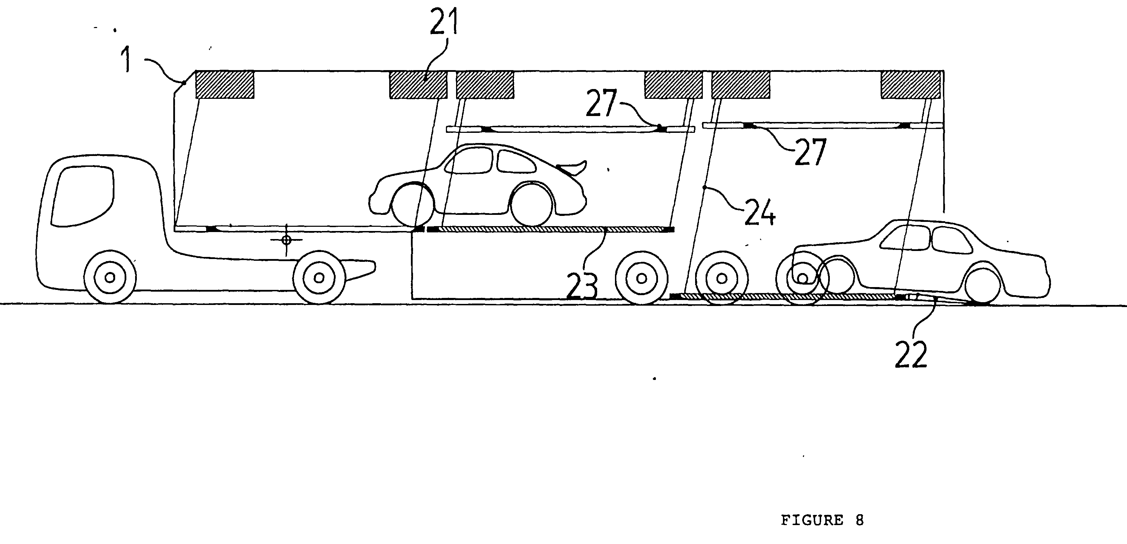

Aux chargements, dont les phases sont référées en figure 8, les voitures destinées aux étages supérieurs sont roulées en positions inférieures sur les palettes à géométrie variable (8), les géométries sont alors adaptées au type de voiture (6), et les voitures (6) sont arrimées et élevées en des positions plus élevées qu'en position transport, ce afin de permettre le passage sous le niveau de leurs roues du toit de la voiture (6) inférieure. Ceci implique bien entendu que la toiture de la remorque puisse être relevée au cours de ces opérations. Les voitures destinées aux étages inférieurs y sont alors roulées et arrimées.

Les palettes à géométrie variable (8) sont ensuite translatées longitudinalement pour répondre aux impératifs d'encastrements volumiques des empilages, avant d'être rabaissées en positions de transports déterminant des gardes au toits sécuritaires et suffisantes pour rencontrer les impératifs de hauteur du véhicule chargé et conformes aux gabarits "r" et "f". Aux déchargements, les opérations sont inversées.

Aux déchargements, les opérations sont inversées, mais peuvent être organisées selon diverses séquences (voir figure 8), ce qui n'oblige pas, contrairement au cas des remorques classiques, à décharger dans la séquence exacte du chargement. Il peut en résulter des gains additionnels de manutention.

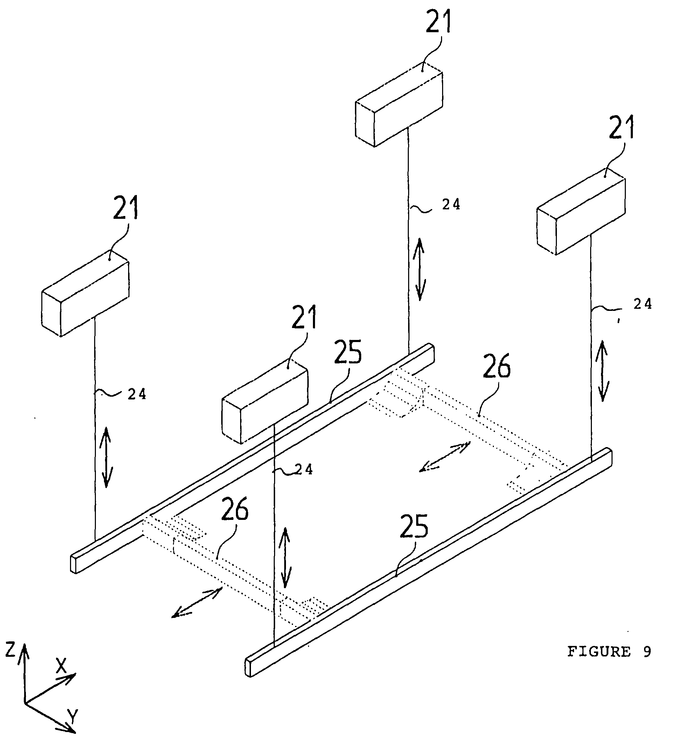

Il ressort du descriptif ci-avant des procédures de chargement et de déchargement que les palettes mobiles à géométrie variable (8) doivent répondre à des variations de positions en hauteur, selon l'axe vertical ou sensiblement vertical conventionnellement nommé z, et à des variations de positions en longueur, selon l'axe longitudinal conventionnellement nommé x (voir figure 9). Le positionnement transversal de la voiture, selon l'axe transversal conventionnellement nommé y, se fait au roulage des voitures et n'est plus modifiable.

Dans les mouvements verticaux ou sensiblement verticaux, c'est à dire en z, l'intégralité de chaque palette (8) est translaté au moyen de quatre suspentes par câbles (24) enroulables sur les dispositif de manutention (21) auxquels elle restera suspendue pendant le transport.

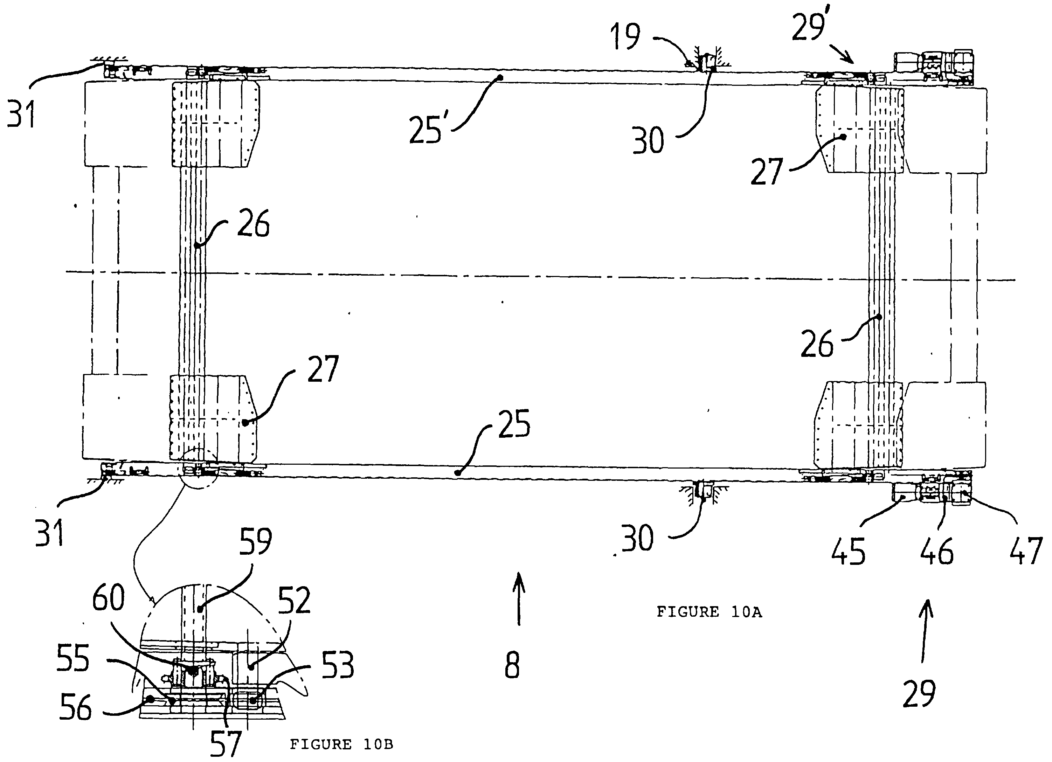

Ces quatre câbles (24) supportent deux Longerons (25) réunis par deux traverse mobiles (26) comprenant chacun deux pelles (27) destinées à supporter les roues (28) des voitures (6) sans encombrer les volumes d'encastrement des toitures dans l'empattement (également représenté à la figure 10).

Dans les mouvements horizontaux ou longitudinaux, c'est à dire en x, les longerons (25) et (25') de la palette (8) restent fixes, et seules les traverses mobiles (26) sont translatées, soit indépendamment, soit de concert, par des dispositifs mécanisés (29) incorporés dans les longerons (25). Ces traverses peuvent être translatées soit indépendamment pour s'adapter aux caractéristiques d'empattement et de positionnement de la voiture, et ce uniquement avant élévation, soit de concert pour déplacer la voiture selon l'axe des x en fonction des besoins d'encastrement, et ce en quelque position en hauteur, selon l'axe des z, que ce soit.

Selon une caractéristique de l'invention, les longerons (25) et les traverses (26), mobiles entre elles, sont reliées par des dispositifs mécaniques articulés, inclus dans les dispositifs mécanisés (29), permettant tant des déplacements longitudinaux relatifs limités des longerons (25) gauche et droit, que des déformations torsionnelles limitées de l'ensemble longerons (25)/ traverses (26), et ce sans induction de contraintes ni fatigues dans ces dispositifs et leurs structures, pour autant que ces déplacements et déformations autorisées soient prévus plus importants que ceux pouvant survenir dans les structures (19) de la semi-remorque (1).

Cette caractéristique autorise sans conséquences dommageables :
- les tolérances de construction des divers composants structurels,
- les inévitables déformations dynamiques de la structure (19) de la semi-remorque (1) lors d'utilisations quelque peu rigoureuses,
- les inévitables allongements différentiels des câbles (24) de suspentes sous des charges statiques ou dynamiques variables,
et, en évitant un état d'hyperstaticité :
- respecte en toutes circonstances les charges nominales à chaque câble (24),
- limite les contraintes et fatigues des composants mécaniques et structurels des palettes (8).

Aux fins de maintenir l'ensemble longerons (25)/traverses (26) en position quasi nominale déterminant des potentialités de déformations quasi symétriques :
- les câbles (24) de suspentes sont fixés aux longerons (25) à la verticale des longerons (53), et
- les translations en x des traverses (26) dans les longerons (25) gauche et droit sont coordonnées par les dispositifs (29).

Les longerons (25) gauche et droits sont chacun retenus longitudinalement en x par une butée bidirectionnelle (30) glissant sur la structure (19) de la semi-remorque (1).

Ils sont retenus transversalement en y par des butées unidirectionnelles (31) glissant sur la structure (19) de la semi-remorque (1), l'ensemble articulé longerons (25)/traverses (26) disposant de butées internes, de compression transversale, en y, mais ne comportant pas de dispositif de retenue à la traction transversale, en y.

Le dispositif de manutention des palettes (8) d'une même colonne B, ou C, comporte quatre unités de manutention (21), chacune destinée à enrouler deux câbles (24) suspendant respectivement un des coins de la palette supérieure (8) et un des coins de la palette inférieure (8').

Les unités de manutention (21) de gauche et de droite sont de même conception. Leur synchronisation lors des déplacements en z s'effectue hydrauliquement par calage sur un même arbre moteur de deux pompes hydrauliques volumétriques (33) de même capacité alimentant respectivement les vérins hydrauliques (34) des unités de gauche et de droite. A chaque dépose des palettes (8) au sol, lesdits vérins (34) de gauche et droite sont mis en communication hydraulique afin d'éviter tout cumul de tolérances de débit pouvant entraîner une mise en pente transversale des palettes (8).

Les unités de manutention (21) avant et arrière, tant de gauche que de droite, sont également de même conception avec la différence que leurs vérins hydrauliques (34) agissent directement, par crémaillère (35) et pignon (36) calé sur les arbres de poulies (38), pour l'un sur le câble (24) de la palette inférieure (8'), pour l'autre sur le câble (24') de la palette supérieure (8), et indirectement, par l'intermédiaire de pignons (39), d'une chaîne (40) de liaison mécanique entre unités de manutention (31) avant et arrière et d'une poulie folle (41) concentrique à la poulie (38) qui est mécanisée, pour l'un sur le câble (24) de la même palette inférieure (8'), pour l'autre sur le câble (24') de la même palette supérieure (8) . Des dispositifs de guidage et de tensionnement (43) des chaînes (40) sont prévus entre unités avant et arrière.

La synchronisation de déplacements en z des quatre câbles (24) d'une même palette (8) s'effectue donc transversalement à la palette de façon hydraulique, et longitudinalement à la palette de façon mécanique.

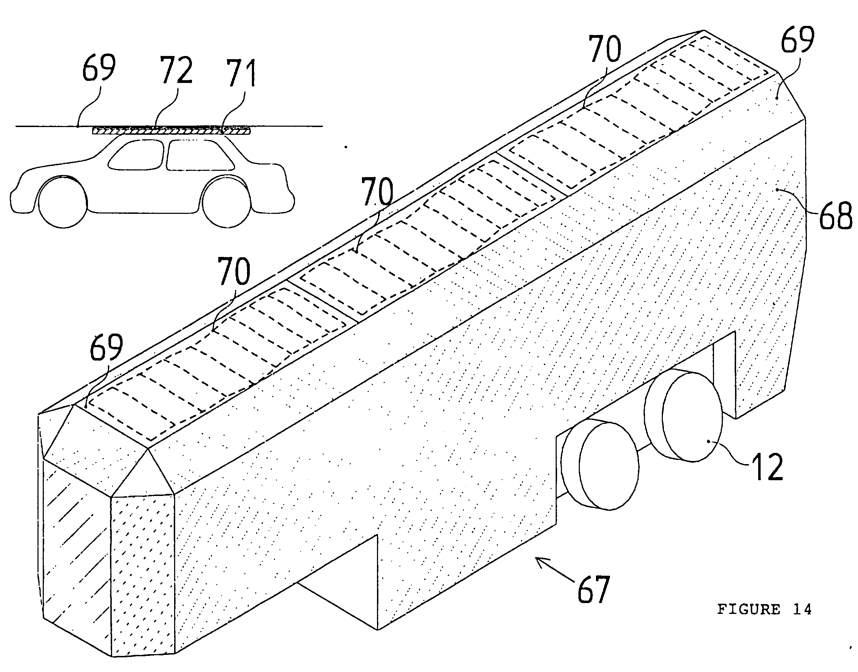

Les déplacements en z de différentes colonnes telles que B et C peuvent également être synchronisés en utilisant deux pompes hydrauliques complémentaires calées sur le même arbre moteur. Les palettes (8) ainsi coordonnées entre elles en déplacements en z et équipées de poutres (23) reliant les pelles (27) constituent alors un pont continu mobile sur lequel des voitures (6) hors normes d'empattement peuvent être roulées et/ou transportées (voir figure 14).

Les courses des déplacements en z sont telles que les palettes (8) peuvent être amenées en position très élevée dans la semi-remorque (1) afin de libérer le plancher (9) plat pour y charger du fret (10), et ce éventuellement au moyen de gerbeurs classiques.

Les liaisons hydrauliques des vérins (34) de gauche et de droite permettent d'éviter toute liaison mécanique qui encombrerait et affaiblirait les structures (19) sous plancher (9) surbaissé et d'éviter tout encombrement en toiture dans les zones ou les voitures (6) supérieures doivent être élevées hors gabarit de hauteur (f) et (r) pendant les opérations d'empilage.

Les déplacements en z de la colonne A s'effectuent de la même manière que pour les colonnes B et C, mais avec un dispositif de manutention (21) simplifié et ne comportant que deux vérins hydrauliques (34), vu qu'il n'y a qu'une palette (8) à déplacer.

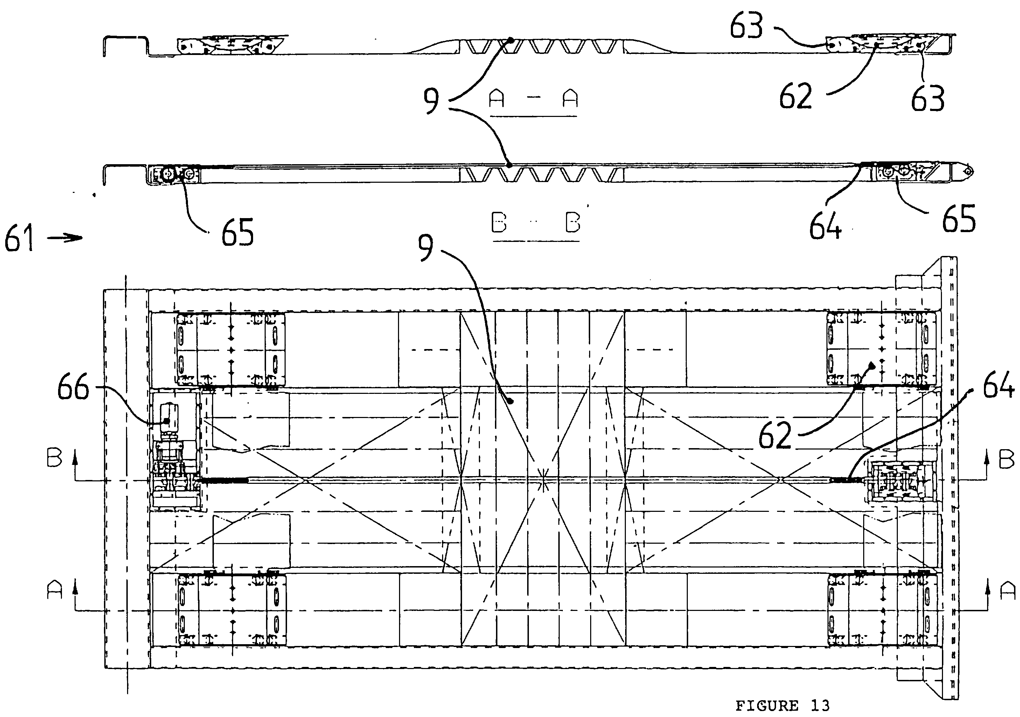

Ces dispositifs de manutention (21) sont installés le long des longrines de toiture auxquelles ils sont intégrés structurellement (19) tout en ménageant un dégagement sous forme de coins supérieurs coupés, afin de rencontrer les impératifs des gabarits ferroviaires (f) lors de transports sur wagons (2) ou (4) (voir également figure 13).

Le dispositif de translation (29) des traverses mobiles (26) par rapport aux longerons (25) au sein de la palette à géométrie variable (8) comporte deux unités de translation de même conception, situées tête bêche au sein de la palette (8), l'une dans le longeron (25) gauche et agissant sur la traverse mobile (26) avant, l'autre dans le longeron (25) droit et agissant sur la traverse mobile (26) arrière, ou vice versa.

Ces unités de translation peuvent être entraînées, soit séparément, pour déplacer indépendamment l'une ou l'autre traverse afin de positionner les pelles (27) des traverses mobiles (26) sous les roues (28) des voitures, en fonction de leur empattement et de leur position au plancher (9), soit de façon coordonnée pour déplacer la voiture (6) palettisée longitudinalement (selon l'axe des x) aux fins de parfaire les encastrements des voitures (6) .

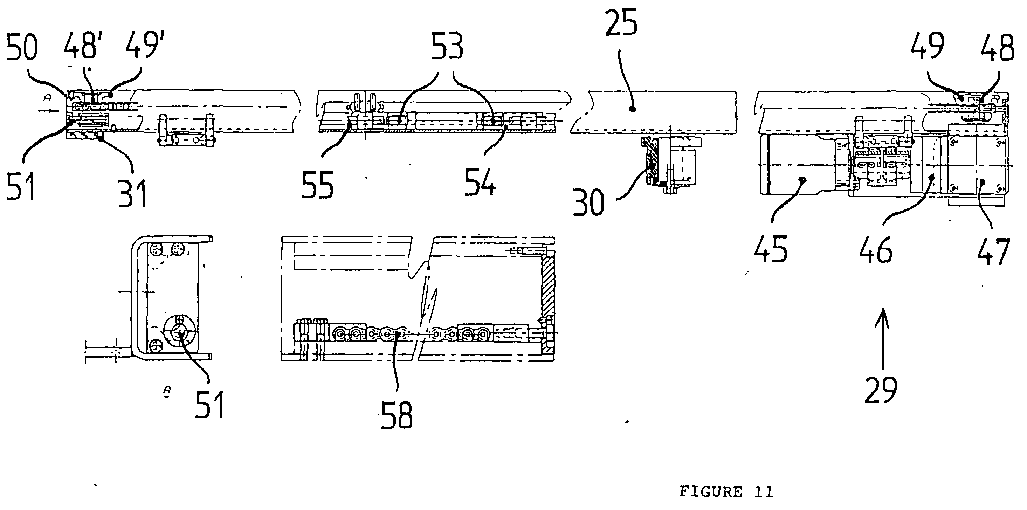

Ces déplacements au sein de chaque unité de translation s'effectuent par l'action d'un moteur hydraulique (45) entraînant par l'intermédiaire éventuel d'un réducteur de vitesse (46) et d'un renvoi d'angle (47), directement un axe (48), et indirectement un axe (48') par l'intermédiaire de pignons (49) et (49') et d'une chaîne (50) tensionnée par un dispositif de tensionnement (51). La chaîne (50) entraîne par ses attaches d'extrémités la traverse mobile (26) à actionner par la dite unité de translation (voir également figure 11).

La traverse mobile (26) comportant les pelles (27) se termine en chacune de ses extrémités par deux axes (52) coulissant dans des rotules (53) insérées dans des mini bogies (54) chacun étant porteur de galets (55) au profil en V roulant sur un rail (56) de même profil solidaire du longeron (25), et d'un pignon (57) engrenant dans une crémaillère (58) également solidaire du longeron (25) (voir figures 10B et 11).

Chaque traverse mobile (26) comporte donc un mini-bogie (54) roulant dans le longeron (25) dont dépend sa translation, du fait qu'elle est entraînée par la chaîne (50), et un mini-bogie roulant en l'unité de translation opposée, ou elle est indépendante de la chaîne (51). Les pignons (49) et (49') portés par les mini-bogies (54) d'une même traverse mobile (26) sont reliés par un axe (59) monté à cardans (60) de façon à coordonner leur progression sur les crémaillères (58) et (58') des deux unités de translation constituant chaque dispositif de translation (29).

Ces déplacements de chaque traverse mobile (26) au sein des longerons (25) et (25') sur lesquelles elles se déplacent se trouvent donc coordonnés, sans pour autant imposer à la palette à géométrie variable (8) un parfait équerrage en plan, ni une parfaite planéité en élévation. Ces dispositifs confèrent à l'invention la caractéristique de n'imposer aucune contrainte de déformation aux palettes (8), quelles que soient les déformations statiques ou dynamiques des structures (19) de la semi-remorque (1).

La semi-remorque (1) est également équipée d'un dispositif de positionnement (61) longitudinal des voitures (6) ayant franchi le hayon (22) mais ne pouvant être conduites en position inférieure de la colonne C du fait que les roues (12) de la semi-remorque (1) y empêchent l'ouverture des portes (voir figures 1 et 13).

Ce dispositif de positionnement (61) comporte deux godets (62) montés sur galets (63) roulant sur le plancher (9), y entraînés par chaînes (64) et poulies (65) motorisés par un moteur (66) électrique ou autre (voir figure 14).

La semi-remorque (1) est enfin équipée d'un dispositif de bâchage (67) (voir figure 14), comprenant des bâches avant, arrière et latérales (68), et une bâche de toiture (69) équipée, pour chaque colonne, d'un sandwich antifriction (70) destiné à permettre des mouvements horizontaux relatifs entre la bâche (69) et les toitures des voitures (6) sans en endommager les peintures.

Ce sandwich antifriction (70) est constitué d'une feuille de caoutchouc cellulaire naturel (71) mise en contact avec la toiture des voitures (6) à laquelle elle adhère, et une feuille de tissus polyester en jersey tricoté imperméable au silicone (72), mise en contact avec la bâche (69) sous laquelle elle glisse facilement vu la très faible adhérence tant à sec qu'en cas de forte humidité, ou de toutes combinaisons de matériaux déterminant le même effet. La bâche de toiture (69) équipée des sandwich antifriction (70) est supportée par une ossature mobile permettant de les soulever hors gabarit lors des opérations d'empilage des voitures.

## Revendications

1. Semi-remorque (1) destinée aux transports de voitures (6) et équipée à cet effet de moyens de manutention (21) et de stockage desdites voitures (6), caractérisée en ce que la semi-remorque (1), d'une part, a des caractéristiques géométriques telles qu'elle respecte, y compris à charge, le gabarit routier international européen (r), et est embarquable sur des wagons dits poches à caractéristiques géométriques telles que l'ensemble wagon/semi-remorque respecte le gabarit ferroviaire international européen (f), et d'autre part, est équipée de moyens de manutention (21) et de stockage constitués d'un nombre de palettes (8) afin de manutentionner et de stocker des voitures (6) empilées et encastrées notamment sur trois niveaux.

2. Semi-remorque (1) selon la revendication 1, caractérisée en ce que les palettes (8) possèdent des traverses (26) qui sont mobiles longitudinalement grâce à un dispositif de translation (29), soit indépendamment, soit par paire, par rapport aux longerons (25) desdites palettes (8).

3. Semi-remorque (1) selon la revendication 1 ou 2, caractérisée en ce qu'elle comporte des faux-essieux multiples (11) à roues indépendantes non jumelées (12).

4. Semi-remorque (1) selon l'une quelconque des revendications précédentes, caractérisée en ce que les palettes à géométrie variable (8) sont constituées de longerons (25) suspendus sensiblement à leurs extrémités par câbles (24) au dispositif de manutention (21), et de traverses mobiles (26) montées à rotules (53) sur lesdits longerons (25), lesdites traverses portant des pelles (27) sur lesquelles reposent et sont arrimées les roues (29) des voitures (6).

5. Semi-remorque (1) selon l'une quelconque des revendications précédentes, caractérisée en ce que le dispositif de translation (29) des traverses (26) par rapport aux longerons (25) des palettes mobiles (8) est constitué de mini-bogies (54) à galets (55) profilés roulant sur des rails (56) à même profil solidaires des longerons, et portant chacun une paire de rotules (53) dans lesquelles coulissent des axes (52) portant les traverses (26), ces traverses étant entraînées par une de leurs extrémités par une chaîne (50) motorisée, et maintenues parallèles entre elles par des pignons (57) situés en leurs extrémités, ces derniers, reliés à cardan (60) par un axe commun (59), étant engrenés dans des crémaillères solidaires (52) des deux longerons (25).

6. Semi-remorque (1) selon l'une quelconque des revendications précédentes, caractérisée en ce que le dispositif de manutention des palettes (8) à géométrie variable est constitué d'un nombre d'unités de manutention (21) dans lesquelles les câbles (24) de suspente des différentes palettes (8) d'une même colonne sont enroulés sur poulies (38 et 41), ces dernières étant montées sur axes motorisés, alternativement de façon solidaire afin de les entraîner, alternativement folles et dans ce cas entraînées par pignons et chaînes motorisés (40) par l'unité de manutention (21) voisine de la même colonne, la motorisation des axes porteurs de poulies motrices (32) étant réalisée par vérins hydrauliques (34) agissant sur des crémaillères (35) engrenées sur pignons (36) solidaires desdits axes, les vérins (34) des unités de manutention de gauche et de droite étant coordonnés dans leurs déplacements par entraînement de leur pompes hydrauliques respectives par un même axe moteur.

7. Semi-remorque (1) selon l'une quelconque des revendications précédentes, caractérisée en ce que dans la position extrême des traverses (26) par rapport aux longerons (25), les palettes (8) à géométrie variable sont équipées de poutres (23) reliant longitudinalement leurs pelles et permettant le roulage des véhicules.

8. Semi-remorque (1) selon l'une quelconque des revendications précédentes, caractérisée en ce que les dispositifs de translation (29) des traverses (26) des palettes (8) à géométrie variable par rapport à leurs longerons (25) agissent à volonté sur une quelconque des deux traverses (26), de façon coordonnée sur les deux traverses (26), ou encore de façon coordonnée sur les traverses (26) de plusieurs palettes (8).

9. Semi-remorque (1) selon l'une quelconque des revendications précédentes, caractérisée en ce que les dispositifs de manutention des palettes (8) à géométrie variable agissent à volonté sur une des palettes (8) d'une colonne, de façon coordonnée sur les deux palettes (8) d'une colonne, ou encore sur les palettes (8) de plusieurs colonnes contiguës.

10. Semi-remorque (1) selon l'une quelconque des revendications précédentes, caractérisée en ce qu'elle comporte un hayon (22) d'accès arrière ainsi qu'un dispositif de positionnement (61) longitudinal des voitures (6) à positionner en dernière colonne, ce dispositif étant constitué de godets (62) montés sur galets (63) et entraînés par chaîne (64), poulies (65) et moteur (66).

11. Semi-remorque (1) selon l'une quelconque des revendications précédentes, caractérisée en ce qu'elle comporte une bâche (68 et 69) montée sur une toiture mobile et que cette bâche (68 et 69) est équipée en toiture d'un sandwich antifriction (70).
